# EUROPEAN PATENT SPECIFICATION

(11) **EP 4 307 411 B1**
(45) Date of publication and mention of the grant of the patent: **31.12.2025**
(21) Application number: 22878888.1
(22) Date of filing: 05.10.2022
(51) Int. Cl.: H01M 4/62, H01M 4/02, H01M 4/525, H01M 10/0587, H01M 10/052, H01M 10/0525

(54) **POSITIVE ELECTRODE FOR SECONDARY BATTERY COMPRISING NOVEL DISPERSANT, ELECTRODE ASSEMBLY COMPRISING SAME, AND SECONDARY BATTERY**
POSITIVELEKTRODE FÜR SEKUNDÄRBATTERIE MIT NEUARTIGEM DISPERGIERMITTEL, ELEKTRODENANORDNUNG DAMIT UND SEKUNDÄRBATTERIE
ÉLECTRODE POSITIVE POUR BATTERIE SECONDAIRE COMPRENANT UN NOUVEAU DISPERSANT, ENSEMBLE ÉLECTRODE LA COMPRENANT, ET BATTERIE SECONDAIRE

(30) Priority: 05.10.2021 KR 20210131692
(43) Date of publication of application: 17.01.2024
(73) Proprietor: LG Energy Solution, Ltd., Seoul 07335 (KR)
(72) Inventor: NOH, Jaekyo, Daejeon 34122 (KR); LEE, Kwan Soo, Daejeon 34122 (KR); KOO, Seongmo, Daejeon 34122 (KR)
(74) Representative: Goddar, Heinz J.
(86) International application number: PCT/KR2022/015003
(87) International publication number: WO 2023/059067

(56) References cited:
- KR-A- 20120 021 807
- KR-A- 20120 079 597
- KR-A- 20160 006 535
- KR-A- 20180 107 759
- KR-A- 20190 037 277
- KR-A- 20200 132 350
- KR-A- 20200 132 721
- KR-A- 20200 132 721
- US-B2- 10 727 477

## Description

### [TECHNICAL FIELD]

### Cross Citation with Related Application(s)

This application claims the benefit of Korean Patent Application No. 10-2021-0131692 filed on October 5, 2021 and Korean Patent Application No. 10-2022-0127179 filed on October 5, 2022 in the Korean Intellectual Property Office.

The present disclosure relates to a positive electrode for a secondary battery containing a novel dispersant, an electrode assembly and a secondary battery comprising the same.

### [BACKGROUND]

Due to the rapid increase in the use of fossil fuels, the demand for the use of alternative energy or clean energy is increasing, and as part thereof, the fields that are being studied most actively are the fields of power generation and power storage using electrochemistry.

At present, a secondary battery is a representative example of an electrochemical device that utilizes such electrochemical energy, and the range of use thereof tends to be gradually expanding.

In recent years, as mobile devices, such as portable computers, portable phones, and cameras, have been increasingly developed, the demand for secondary batteries has also sharply increased as an energy source for the mobile devices. Among such secondary batteries is a lithium secondary battery exhibiting high charge/discharge characteristics and lifespan characteristics and being environmentally friendly, in which much research has been carried out and which is now commercialized and widely used.

Generally, the lithium secondary battery is manufactured by impregnating an electrode assembly comprising a positive electrode, a negative electrode, and a porous separator with a lithium non-aqueous electrolyte.

Depending upon the shape of a battery case, a secondary battery may generally include a cylindrical secondary battery or a prismatic secondary battery in which a stacked/folded type, or wound type electrode assembly is housed in a case made of metal as a battery case, a pouch type secondary battery in which a stacked type or stacked/folding type electrode assembly is built into a pouch type battery case made of an aluminum laminate sheet, and the like.

Meanwhile, as the cylindrical battery is used as a battery for an electric vehicle, the loading of the active material layer is gradually increasing in response to the demand for improving energy of the cylindrical battery.

However, when these laminates are wound to produce a wound type electrode assembly for use in a cylindrical battery after manufacturing high-loading electrodes, there is a problem that cracks occur in the positive electrode located in a core portion and deteriorates battery performance.

Documents KR20200132721A and KR20200132350A disclose positive electrodes for lithium secondary batteries manufactured by depositing an electrode slurry composition on a current collector. The electrode slurry comprises a mixture of dispersants.

Therefore, there is an urgent need to develop a technology for a positive electrode for a secondary battery that can solve these problems and does not occur cracks even when manufacturing a wound type electrode assembly having a small curvature.

### [DETAILED DESCRIPTION OF THE INVENTION]

### [Technical Problem]

The present disclosure has been designed to solve the above-mentioned problems and other technical problems that have yet to be resolved.

Specifically, it is an object of the present disclosure to provide a positive electrode for a secondary battery with improved flexibility that can prevent cracking of the innermost positive electrode during the manufacture of an electrode assembly having a wound structure in order to prevent deterioration of secondary battery performance, an electrode assembly and a secondary battery comprising the same.

### [Technical Solution]

In order to achieve the above objects, according to one embodiment of the present disclosure, there is provided a positive electrode for a secondary battery according to claim 1,
wherein the positive electrode is formed on at least one surface of the current collector and comprises a positive electrode mixture layer including a positive electrode active material, a conductive material, a binder, and a dispersant,
wherein the dispersant is a mixture of a butadiene-acrylonitrile-based first dispersant and a styrene-ethylene oxide-based (styrene-EO-based) second dispersant, and
wherein the dispersant is contained in an amount of 0.1% by weight or more to less than 0.3% by weight based on the total weight of the positive electrode mixture layer.

More specifically, the dispersant may be contained in an amount of 0.15% by weight to 0.25% by weight based on the total weight of the positive electrode mixture layer.

The dispersant has a mixing ratio of the first dispersant and the second dispersant of 8:2 to 2:8 on a weight basis.

The first dispersant is a butadiene-acrylonitrile-based polymer in which 50 to 80% by weight of hydrogenated butadiene, 0.1 to 10% by weight of non-hydrogenated butadiene, and 15 to 40% by weight of acrylonitrile are polymerized. The butadiene-acrylonitrile-based polymer may have a weight average molecular weight of 30,000 to 80,000.

The second dispersant is a styrene-ethylene oxide-based polymer in which 20 to 40% by weight of styrene, 40 to 60% by weight of ethylene oxide, and 15 to 30% by weight of an aliphatic compound are polymerized. The styrene-ethylene oxide-based polymer may have a weight average molecular weight of 9,000 to 12,000.

Meanwhile, the positive electrode active material may be a lithium transition metal oxide represented by the following chemical formula 1:

Li₁₊ₓNiₐCo_{b}Mn_{c}M_{1-(a+b+c)}O_{2-y}A_{y} (1)

wherein,
M is at least one selected from the group consisting of Cu, Ti, Mg, Al, Pt, and Zr,
A is an oxygen-substitution type halogen,
0≤x≤0.5, 0.8≤a≤1, 0≤b≤0.2, 0≤c≤0.2, 0.9≤a+b+c≤1, and 0≤y≤0.001.

The conductive material may be a carbon nanotube.

The positive electrode comprising the dispersant according to the present disclosure is preferably applied to high-loading positive electrodes, and specifically, the positive electrode mixture layer may have a loading amount of 26 mg/cm² to 30 mg/cm².

The positive electrode for a secondary battery having such a configuration may have a brittleness of 41 gf to 50 gf, that is of 0.40 N to 0.49 N.

Meanwhile, according to another embodiment of the present disclosure, there is provided an electrode assembly comprising the positive electrode for a secondary battery, a negative electrode, and a separator, wherein the electrode assembly has a structure in which the positive electrode, the negative electrode, and the separator are wound together so that the positive electrode is present on the innermost side, and wherein the **innermost radius (r)** is 1.4 mm to 2.0 mm.

According to yet another embodiment of the present disclosure, there is provided a secondary battery in which the electrode assembly and an electrolyte are incorporated together in a battery case.

### [DETAILED DESCRIPTION OF THE EMBODIMENTS]

Hereinafter, the present disclosure will be described in more detail for a better understanding of the present disclosure.

Terms or words used in the present specification and claims should not be construed as limited to ordinary or dictionary terms, and the present disclosure should be construed with meanings and concepts that are consistent with the technical idea of the present disclosure based on the principle that the inventors may appropriately define concepts of the terms to appropriately describe their own disclosure in the best way.

The technical terms provided herein is merely used for the purpose of describing particular embodiments only, and is not intended to be limiting of the present disclosure. The singular forms "a, ""an," and "the" are intended to include the plural forms as well, unless the context clearly indicates otherwise.

The term "including" or "comprising" as used herein specifies a specific feature, integer, step, action, component or a combination thereof, but does not exclude the presence or addition of a different specific feature, integer, step, component and/or a combination thereof.

According to one embodiment of the present disclosure, there is provided a positive electrode for a secondary battery according to claim 1.

Conventionally, a dispersant was used to improve the dispersibility of the positive electrode, but a conventionally used dispersant does not have sufficient dispersibility as the loading amount increases, and thus is low in electrode flexibility. And, when manufacturing an electrode assembly of the wound structure, cracks occurred in the core portion, which causes the problem that the secondary battery performance and stability are deteriorated.

Thus, the present inventors have conducted intensive research, and as a result, when using a high-loading positive electrode, a novel dispersing agent that can ensure sufficient dispersibility was applied, and the content of the dispersant that can exhibit optimized secondary battery performance was derived.

Specifically, the dispersant used in the positive electrode for a secondary battery according to the present disclosure is a mixture of a butadiene-acrylonitrile-based first dispersant and a styrene-ethylene oxide-based (styrene-EO-based) second dispersant, and the content of the total dispersant may be 0.1% by weight or more and less than 0.3% by weight, specifically 0.15% by weight to 0.25% by weight, more specifically 0.15% to 0.2% by weight, based on the total weight of the positive electrode mixture layer.

If the total content of the dispersant is too small outside the above range, the electrode flexibility improvement effect according to the present disclosure, that is, the crack prevention effect cannot be obtained, and if the content is too large, the dispersant acts as a resistance to increase the electrode resistance, which is not preferable.

In addition, the mixing ratio of the first dispersant and the second dispersant is 9:1 to 1:9 by weight, specifically 2:8 to 8:2, and more specifically 4:6 to 6:4.

The butadiene-acrylonitrile-based first dispersant serves to improve dispersibility of the positive electrode active material, and the like, and the styrene-ethylene oxide-based (styrene-EO-based) second dispersant serves to impart flexibility to the electrode.

Therefore, when any one side is included too small outside the above range, the effect intended by the present disclosure cannot be properly exhibited.

The first dispersant is a butadiene-acrylonitrile-based polymer in which 50 to 80% by weight of hydrogenated butadiene, 0.1 to 10% by weight of non-hydrogenated butadiene, and 15 to 40% by weight of acrylonitrile are polymerized.

Most specifically, the first dispersant may be a butadiene-acrylonitrile-based polymer in which 60 to 70% by weight of hydrogenated butadiene, 0.1 to 1% by weight of non-hydrogenated butadiene, and 29 to 39% by weight of acrylonitrile are polymerized.

When the first dispersant is contained within the above range, the effect of dispersibility can be sufficiently exhibited, and sufficient flexibility of the electrode can be ensured.

Further, the butadiene-acrylonitrile-based polymer may have a weight average molecular weight of 30,000 to 80,000, specifically 40,000 to 60,000.

If the molecular weight is too small outside the above range, there is a problem that agglomeration does not occur and layer separation occurs during positive electrode coating and drying, and if the molecular weight is too large, there is a problem that the dispersibility in the solvent is lowered, and slurry agglomeration phenomena occur to act as a resistance, which is not preferable.

Further, the second dispersant is a styrene-ethylene oxide-based polymer in which 20 to 40% by weight of styrene, 40 to 60% by weight of ethylene oxide, and 15 to 30% by weight of an aliphatic compound are polymerized.

Most specifically, the second dispersant may be a styrene-ethylene oxide-based polymer in which 20 to 30% by weight of styrene, 50 to 60% by weight of ethylene oxide, and 20 to 30% by weight of an aliphatic compound are polymerized.

When the second dispersant is contained within the above range, sufficient dispersion phase stability can be ensured, and a viscosity in an appropriate range can be obtained.

Further, the styrene-ethylene oxide-based polymer may have a weight average molecular weight of 9,000 to 12,000, specifically 10,000 to 11,000.

If the molecular weight is too small outside the above range, there is a problem that the viscosity of the slurry is lowered and the solid content cannot be increased, causing damage to the positive electrode during coating and drying. If the molecular weight is too large, there is a problem that the dispersibility is lowered, slurry agglomeration phenomena occur to cause a resistance, the viscosity of the slurry is too high, resulting in a decrease in phase stability, which is not preferable.

When the novel dispersant under the above conditions is used, sufficient flexibility can be imparted even to the high-loaded positive electrode, and thus, cracks may not occur in the core portion even when wound with a small curvature.

The weight average molecular weight (Mw) can be measured by using a gel permeation chromatography (GPC). Specifically, it is evaluated by using Waters PL-GPC220 instrument and Polymer Laboratories PLgel MIX-B 300 mm length column. The evaluation temperature is 160°C, 1,2,4-trichlorobenzene is used as a solvent, the flow rate is 1 mL/min. Samples are prepared at a concentration of 10 mg/10 mL and then supplied in an amount of 200 µL. The values of Mw can be obtained using a calibration curve formed using a polystyrene standard. Nine kinds of the polystyrene standards are used with the molecular weight of 2,000 / 10,000 / 30,000 / 70,000 / 200,000 / 700,000 / 2,000,000 / 4,000,000 / 10,000,000.

Meanwhile, the positive electrode active materials may respectively include a layered compound such as lithium cobalt oxide (LiCoO₂), lithium nickel oxide (LiNiO₂), or a compound substituted with one or more transition metals; lithium manganese oxides such as chemical formulae Li₁₊ₓMn₂₋ₓO₄ (where x is 0 ~ 0.33), LiMnO₃, LiMn₂O₃, LiMnO₂; lithium copper oxide (Li₂CuO₂); vanadium oxides such as LiV₃O₈, LiV₃O₄, V₂O₅, and Cu₂V₂O₇; a Ni-site type lithium nickel oxide represented by chemical formula LiNi₁₋ₓMₓO₂ (where M=Co, Mn, Al, Cu, Fe, Mg, B or Ga, and x=0.01 ~ 0.3); lithium manganese composite oxide represented by chemical formulae LiMn₂₋ₓMₓO₂ (where M = Co, Ni, Fe, Cr, Zn or Ta, and x = 0.01 ~ 0.1) or Li₂Mn₃MO₈ (where, M = Fe, Co, Ni, Cu or Zn); lithium manganese composite oxide having a spinel structure represented by chemical formula LiNiₓMn₂₋ₓO₄; LiMn₂O₄ in which a part of Li in the chemical formula is substituted with an alkaline earth metal ion; lithium iron phosphate represented by LiFePO₄; disulfide compound; Fe₂(MoO₄)₃, or the like, but are not limited thereto.

However, it is important to improve the energy density of the high-loading positive electrode to which the present disclosure is applied, and thus, the positive electrode active material may be a lithium transition metal oxide having a high Ni content represented by the following chemical formula 1:

Li₁₊ₓNiₐCo_{b}Mn_{c}M_{1-(a+b+c)}O₂-_{y}A_{y} (1)

wherein,
M is at least one selected from the group consisting of Cu, Ti, Mg, Al, Pt, and Zr,
A is an oxygen-substitution type halogen,
0≤x≤0.5, 0.8≤a≤1, 0≤b≤0.2, 0≤c≤0.2, 0.9≤a+b+c≤1, and 0≤y≤0.001.

More specifically, the a may be 0.88 ≤a<1.

Further, a mixture of the lithium transition metal oxide represented by the chemical formula 1 and another active material can also be used.

Further, the conductive material is not particularly limited as long as it has high conductivity without causing a chemical change in the corresponding battery, and for example, graphite such as natural graphite and artificial graphite; carbon blacks such as carbon black, acetylene black, ketjen black, channel black, furnace black, lamp black, and thermal black; conductive fibers such as carbon fiber and metal fiber; carbon fluoride powder; metal powders such as aluminum powder, and nickel powder; conductive whiskers such as zinc oxide and potassium titanate; conductive metal oxides such as titanium oxide; conductive materials such as polyphenylene derivatives, and the like can be used. Specifically, the carbon fiber may be carbon nanotubes.

The carbon nanotubes may be single-walled carbon nanotubes or multi-walled carbon nanotubes.

The conductive material may be contained in an amount of 0.1 to 30% by weight, specifically 0.1 to 10% by weight, and more specifically 0.5 to 5% by weight, based on the total weight of the positive electrode mixture layer.

If the content is too large outside the above range, the content of the active material is relatively reduced and thus, the capacity is reduced, and if the content is too small, the conductivity and the output characteristics may be deteriorated, which is not preferable.

Specific examples of the binder include polyvinylidenefluoride (PVDF), a polyvinylidenefluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylenepropylene-diene monomers (EPDMs), sulfonated EPDMs, styrene-butadiene rubber (SBR), fluorine rubber, and various copolymers thereof.

The binder may be contained in an amount of 0.1 to 30% by weight, specifically 0.1 to 10% by weight, more specifically 0.5 to 5% by weight, based on the total weight of the positive electrode mixture layer.

If the content of the binder is too large outside the above range, the content of active material decreases and thus, the capacity decreases. If the content is too small, the adhesive strength may be lowered and the lifespan performance may be deteriorated, which is not preferable.

Meanwhile, the present disclosure is more effective in a high-loading positive electrode, and thus, the positive electrode mixture layer may have a loading amount of 26 mg/cm² to 30 mg/cm².

Application of the dispersant according to the present disclosure in a high-loading positive electrode within the above range may be most effective.

The positive electrode for a secondary battery having such a configuration may have increased flexibility so that a brittleness may be 41 gf to 50 gf (corresponding to 0.40 N to 0. 49 N).

The brittleness is a value in which the positive electrode is placed on a support base so that both ends of the prepared positive electrode having a width of 3 cm or less are located on the support base, the middle part is made separated from a ground surface, and then the center of the positive electrode is pressed from the top with a 3cm x 10cm x 10mm plate at the thinnest portion at a speed of 1mm/sec, and the strength at which the positive electrode breaks is measured, which value is not affected by the area of the positive electrode.

If the brittleness of the positive electrode is too large outside the above range, there is a problem that the flexibility of the positive electrode is lowered, and when an electrode assembly having a wound structure is manufactured using the positive electrode, a crack occurs in the core portion. If the brittleness is too large, the content of the dispersant is increased and the resistance increases, which are not preferable.

Meanwhile, according to another embodiment of the present disclosure, there is provided an electrode assembly comprising the positive electrode for a secondary battery as set forth in claim 1, a negative electrode, and a separator, wherein the electrode assembly has a structure in which the positive electrode, the negative electrode, and the separator are wound together so that the positive electrode is present on the innermost side, and wherein the innermost radius (r) is 1.4 mm to 2.0 mm.

When using the positive electrode prepared as described above, the electrode flexibility is increased, and thus, even if the innermost radius (r) is formed as small as the above range, cracks in the core portion do not occur, thereby enabling manufacture of an electrode assembly having a higher energy density per volume.

According to yet another embodiment of the present disclosure, there is provided a secondary battery in which the electrode assembly and an electrolyte are incorporated together in a battery case.

Further components included in the secondary batteries are well known in the art, and thus, a detailed description thereof is omitted herein, and the conventional structure is included within the present disclosure.

Hereinafter, preferred examples of the present disclosure, comparative examples for comparing them, and experimental examples for evaluating them are described. However, it will be obvious to those skilled in the art that these examples are for illustrative purposes only and various changes and modifications can be made without deviating from the scope and spirit of the present description, and it goes without saying that such modifications and modifications fall within the scope of the appended claims.

### <Example 1>

An active material mixture in which LiNi_{0.88}Co_{0.07}Mn_{0.04}Al_{0.01}O₂ as a positive electrode active material and, Li₂NiO₂ as a sacrificial positive electrode material were mixed in a weight ratio of 95:5, carbon nanotubes as a conductive material, a mixture of a butadiene-acrylonitrile-based dispersant having a weight average molecular weight of 50,000 and a styrene-ethylene oxide-based dispersant having a weight average molecular weight of 10,000 in a weight ratio of 40:60 as a dispersant, and PVDF as a binder were mixed at a weight ratio of 98.02:0.6:0.1:1.28 in an N-methylpyrrolidone solvent to prepare a composition for forming a positive electrode, which was applied to an aluminum current collector such that the loading amount was 28.9 mg/cm², thereby manufacturing a positive electrode A.

### <Example 2>

A positive electrode B was manufactured in the same manner as in Example 1, except that in Example 1, active material mixture: conductive material: dispersant: binder were mixed at a weight ratio of 97.94:0.6:0.18:1.28 in an N-methylpyrrolidone solvent.

### <Example 3>

A positive electrode C was manufactured in the same manner as in Example 1, except that in Example 1, active material mixture: conductive material: dispersant: binder were mixed at a weight ratio of 97.94:0.6:0.18:1.28 in an N-methylpyrrolidone solvent, and butadiene-acrylonitrile-based dispersant having a weight average molecular weight of 20,000 was used.

### <Example 4>

A positive electrode D was manufactured in the same manner as in Example 1, except that in Example 1, active material mixture: conductive material: dispersant: binder were mixed at a weight ratio of 97.94:0.6:0.18:1.28 in an N-methylpyrrolidone solvent, and butadiene-acrylonitrile-based dispersant having a weight average molecular weight of 90,000 was used.

### <Example 5>

A positive electrode E was manufactured in the same manner as in Example 1, except that in Example 1, active material mixture: conductive material: dispersant: binder were mixed at a weight ratio of 97.94:0.6:0.18:1.28 in an N-methylpyrrolidone solvent, and styrene-ethylene oxide-based dispersant having a weight average molecular weight of 5,000 was used.

### <Example 6>

A positive electrode F was manufactured in the same manner as in Example 1, except that in Example 1, active material mixture: conductive material: dispersant: binder were mixed at a weight ratio of 97.94:0.6:0.18:1.28 in an N-methylpyrrolidone solvent, and butadiene-acrylonitrile-based dispersant having a weight average molecular weight of 15,000 was used.

### <Comparative Example 1>

A positive electrode G was manufactured in the same manner as in Example 1, except that in Example 1, active material mixture: conductive material: dispersant: binder were mixed at a weight ratio of 97.82:0.6:0.3:1.28 in an N-methylpyrrolidone solvent.

### <Comparative Example 2>

An active material mixture in which LiNi_{0.88}Co_{0.07}Mn_{0.04}Al_{0.1}O₂ as a positive electrode active material and Li₂NiO₂ as a sacrificial positive electrode material were mixed in a weight ratio of 95:5, carbon nanotubes as a conductive material, a butadiene-acrylonitrile-based dispersant having a weight average molecular weight of 220,000 as a dispersing agent, and PVDF as a binder were mixed at a weight ratio of 98:0.6:0.12:1.28 in an N-methylpyrrolidone solvent to prepare a composition for forming a positive electrode, which was applied to an aluminum current collector such that the loading amount was 28.9 mg/cm², thereby manufacturing a positive electrode H.

### <Comparative Example 3>

A positive electrode I was manufactured in the same manner as in Example 1, except that in Example 1, the content of the dispersant was reduced, and the active material mixture: conductive material: dispersant: binder were mixed at a weight ratio of 98.03: 0.6: 0.07: 1.28 in an N-methylpyrrolidone solvent.

### <Experimental Example 1>

### Brittleness measurement

Three positive electrodes manufactured in Examples 1 to 6 and Comparative Examples 1 to 3 were respectively prepared into a size of 10mm× 150mm. The positive electrode prepared using Stable Micro Systems' texture analysis equipment_was placed on a support base so that both ends of the prepared positive electrode were located on the support base, the middle part was made separated from a ground surface, and then the center of the positive electrode was pressed from the top with a 3cm x 10cm x 10mm plate at the thinnest portion, and the strength at which the positive electrode breaks was measured three times. The descending speed of the plate was 1 mm/s.

The results are shown in Table 1 below. The greater the value in Table 1 below, means the lower the flexibility.

**[Table 1]**

| | 1-time (gf) | 2-time (gf) | 3-time (gf) |
|---|---|---|---|
| Example 1 | 48.3 | 49.8 | 49.3 |
| Example 2 | 45.1 | 44.1 | 42.4 |
| Example 3 | 43.5 | 42.7 | 43.9 |
| Example 4 | 46.7 | 45.4 | 46.6 |
| Example 5 | 43.1 | 44.5 | 42.1 |
| Example 6 | 47.4 | 46.4 | 45.9 |
| Comparative Example 1 | 40.3 | 40.0 | 41.6 |
| Comparative Example 2 | 56.7 | 51.4 | 53.9 |
| Comparative Example 3 | 49.4 | 51.7 | 50.6 |

Referring to Table 1, it can be confirmed that in the case of the present disclosure, the brittleness is 41 gf to 50 gf or less, and appropriate flexibility is secured. It can be confirmed that Comparative Example 2 using a conventional dispersant has too high brittleness and thus the flexibility deteriorates, and even if the content of the dispersant is too high or too low, the brittleness is too low or too high.

### <Experimental Example 2>

### Crack measurement

The positive electrodes manufactured in Examples 1 to 6 and Comparative Examples 1 to 3 were wound using a 3.2pi mandrel. After 1 hour, the positive electrodes were unwound and the presence or absence of cracks were visually checked. The results are shown in Table 2 below.

**[Table 2]**

| | Presence or absence of cracks |
|---|---|
| Example 1 | X |
| Example 2 | X |
| Example 3 | X |
| Example 4 | X |
| Example 5 | X |
| Example 6 | X |
| Comparative Example 1 | X |
| Comparative Example 2 | O |
| Comparative Example 3 | X |

Referring to Table 2, it can be confirmed that cracks occurred in Comparative Example 2 having too high brittleness as confirmed in Table 1.

### <Experimental Example 3>

### DCIR measurement

The positive electrodes manufactured in Examples 1 to 6 and Comparative Examples 1 to 3 were prepared.

A mixture of graphite: SiO in a weight ratio of 95:5 as an negative electrode active material, a styrene-butadiene rubber (SBR) as a binder, sodium carboxymethylcellulose (CMC) as a thickener, and carbon black as a conductive material were mixed at a weight ratio of 97:1:1:1, and then added to water as a solvent to prepare a composition for forming a negative electrode, which was applied to a 10 *µ*m copper current collector to manufacture a negative electrode.

A polyethylene separator (thickness: 15 um) was interposed between the positive electrode and the negative electrode manufactured above, and then an electrolyte solution, containing a mixed solvent of ethylene carbonate (EC), ethylmethyl carbonate (EMC), and dimethyl carbonate (DMC) in a volume ratio of 20:10:70, and containing 1M of 1.3M LiPF₆ among the total amount of the electrolyte solution, was injected to manufacture a secondary battery.

When the secondary battery is charged to SOC of 50% at room temperature and discharged at 0.5C for 10 seconds, the voltage drop that occurs is recorded. The resistance value (mOhm) of the secondary battery is measured using R=V/I, and the results are shown in Table 3 below.
Charge: 0.5C, CC/CV, 4.25V, 1/20C cut-off
Discharge: 0.5C, CC, 2.5V, cut-off

**[Table 3]**

| | DCIR(mOhm) |
|---|---|
| Example 1 | 23.2 |
| Example 2 | 23.5 |
| Example 3 | 24.1 |
| Example 4 | 25.2 |
| Example 5 | 24.4 |
| Example 6 | 24.9 |
| Comparativ e Example 1 | 28.9 |
| Comparativ e Example 2 | 22.7 |
| Comparativ e Example 3 | 25.3 |

Referring to Table 3, it can be confirmed that when the positive electrode according to the present disclosure is used, it exhibits the resistance value of similar level to the case where the conventional dispersant is used. However, it can be confirmed that when the content is 0.3% by weight or more, the resistance increases abruptly, and even when a small content of the dispersant is used, the resistance increases rather.

On the other hand, it can be confirmed that when the weight average molecular weight of the dispersant is too small or large (Examples 3 to 6), the stability of the slurry is lowered and the dispersant acts as a resistance, whereby the resistance tends to slightly increase compared to Example 2.

Based on the above disclosure, various applications and modifications can be carried out by those of ordinary skill in the art without deviating from the scope of the claims.

### [Industrial Applicability]

As described above, the positive electrode for a secondary battery according to one embodiment of the present disclosure contains a novel dispersant, and therefore, even when manufactured by high loading, it is possible to prevent cracks in a core portion during manufacture of an electrode assembly having a wound structure, and thus is effective in preventing deterioration in the performance of a secondary battery including the same.

## Claims

1. A positive electrode for a secondary battery,
wherein the positive electrode is formed on at least one surface of the current collector and comprises a positive electrode mixture layer including a positive electrode active material, a conductive material, a binder, and a dispersant,
wherein the dispersant is a mixture of a butadiene-acrylonitrile-based first dispersant and a styrene-ethylene oxide-based (styrene-EO-based) second dispersant,
wherein the dispersant is contained in an amount of 0.1% by weight or more to less than 0.3% by weight based on the total weight of the positive electrode mixture layer,
the dispersant has a mixing ratio of the first dispersant and the second dispersant of 8:2 to 2:8 on a weight basis,
the first dispersant is a butadiene-acrylonitrile-based polymer in which 50 to 80% by weight of hydrogenated butadiene, 0.1 to 10% by weight of non-hydrogenated butadiene, and 15 to 40% by weight of acrylonitrile are polymerized, and
the second dispersant is a styrene-ethylene oxide-based polymer in which 20 to 40% by weight of styrene, 40 to 60% by weight of ethylene oxide, and 15 to 30% by weight of an aliphatic compound are polymerized.

2. The positive electrode for a secondary battery according to claim 1 wherein:
the dispersant is contained in an amount of 0.15% by weight to 0.25% by weight based on the total weight of the positive electrode mixture layer.

3. The positive electrode for a secondary battery according to claim 1 wherein:
the butadiene-acrylonitrile-based polymer has a weight average molecular weight of 30,000 to 80,000.

4. The positive electrode for a secondary battery according to claim 1 wherein:
the styrene-ethylene oxide-based polymer has a weight average molecular weight of 9,000 to 12,000.

5. The positive electrode for a secondary battery according to claim 1 wherein:
the positive electrode active material is a lithium transition metal oxide represented by the following chemical formula 1:
Li₁₊ₓNiₐCo_{b}Mn_{c}M_{1-(a+b+c)}O_{2-y}A_{y} (1)
wherein,
M is at least one selected from the group consisting of Cu, Ti, Mg, Al, Pt, and Zr,
A is an oxygen-substitution type halogen,
0≤x≤0.5, 0.8≤a≤1, 0≤b≤0.2, 0≤c≤0.2, 0.9≤a+b+c≤1, and 0≤y≤0.001.

6. The positive electrode for a secondary battery according to claim 1 wherein:
the conductive material is a carbon nanotube.

7. The positive electrode for a secondary battery according to claim 1 wherein:
the positive electrode mixture layer has a loading amount of 26 mg/cm² to 30 mg/cm².

8. The positive electrode for a secondary battery according to claim 1 wherein:
the positive electrode for a secondary battery has a brittleness of 0.40 N (41 gf) to 0.49 N (50 gf); and
the brittleness is a value in which the positive electrode is placed on a support base so that both ends of the prepared positive electrode having a width of 3 cm or less are located on the support base, the middle part is made separated from a ground surface, and then the center of the positive electrode is pressed from the top with a 3cm × 10cm × 10mm plate at the thinnest portion at a speed of 1mm/sec, and the strength at which the positive electrode breaks is measured.

9. An electrode assembly comprising the positive electrode for a secondary battery as set forth in claim 1, a negative electrode, and a separator,
wherein the electrode assembly has a structure in which the positive electrode, the negative electrode, and the separator are wound together so that the positive electrode is present on the innermost side, and
wherein the innermost radius (r) is 1.4 mm to 2.0 mm.

10. A secondary battery in which the electrode assembly as set forth in claim 9 and an electrolyte are incorporated together in a battery case.

## Patentansprüche

1. Positive Elektrode für eine Sekundärbatterie,
wobei die positive Elektrode auf mindestens einer Oberfläche des Stromabnehmers gebildet ist und eine Positivelektrodenmischungsschicht umfasst, die ein Positivelektrodenaktivmaterial, ein leitfähiges Material, ein Bindemittel und ein Dispergiermittel beinhaltet,
wobei das Dispergiermittel eine Mischung aus einem ersten Dispergiermittel auf Butadien-Acrylnitril-Basis und einem zweiten Dispergiermittel auf Styrol-Ethylenoxid-Basis (Styrol-EO-Basis) ist,
wobei das Dispergiermittel in einer Menge von 0,1 Gew.-% oder mehr bis weniger als 0,3 Gew.-%, bezogen auf das Gesamtgewicht der Positivelektrodenmischungsschicht, enthalten ist,
das Dispergiermittel ein Mischungsverhältnis des ersten Dispergiermittels und des zweiten Dispergiermittels von 8:2 bis 2:8 auf Gewichtsbasis aufweist,
das erste Dispergiermittel ein Polymer auf Butadien-Acrylnitril-Basis ist, in dem 50 bis 80 Gew.-% hydriertes Butadien, 0,1 bis 10 Gew.-% nicht hydriertes Butadien und 15 bis 40 Gew.-% Acrylnitril polymerisiert sind, und
das zweite Dispergiermittel ein Polymer auf Styrol-Ethylenoxid-Basis ist, in dem 20 bis 40 Gew.-% Styrol, 40 bis 60 Gew.-% Ethylenoxid und 15 bis 30 Gew.-% einer aliphatischen Verbindung polymerisiert sind.

2. Positive Elektrode für eine Sekundärbatterie nach Anspruch 1, wobei:
das Dispergiermittel in einer Menge von 0,15 Gew.-% bis 0,25 Gew.-%, bezogen auf das Gesamtgewicht der Positivelektrodenmischungsschicht, enthalten ist.

3. Positive Elektrode für eine Sekundärbatterie nach Anspruch 1, wobei:
das Polymer auf Butadien-Acrylnitril-Basis ein gewichtsmittleres Molekulargewicht von 30.000 bis 80.000 aufweist.

4. Positive Elektrode für eine Sekundärbatterie nach Anspruch 1, wobei:
das Polymer auf Styrol-Ethylenoxid-Basis ein gewichtsmittleres Molekulargewicht von 9.000 bis 12.000 aufweist.

5. Positive Elektrode für eine Sekundärbatterie nach Anspruch 1, wobei:
das Positivelektrodenaktivmaterial ein Lithiumübergangsmetalloxid ist, das durch die folgende chemische Formel 1 dargestellt ist:
Li₁₊ₓNiₐCo_{b}Mn_{c}M_{1-(a+b+c)}O_{2-y}A_{y} (1)
wobei
M mindestens eines ist, das aus der Gruppe ausgewählt ist, die aus Cu, Ti, Mg, Al, Pt und Zr besteht,
A ein Halogen vom Sauerstoffsubstitutionstyp ist,
0≤x≤0,5, 0,8≤a≤ 1, 0≤b≤0,2, 0≤c≤0,2, 0,9≤a+b+c≤ 1 und 0≤y≤0,001.

6. Positive Elektrode für eine Sekundärbatterie nach Anspruch 1, wobei:
das leitfähige Material eine Kohlenstoffnanoröhre ist.

7. Positive Elektrode für eine Sekundärbatterie nach Anspruch 1, wobei:
die Positivelektrodenmischungsschicht eine Beladungsmenge von 26 mg/cm² bis 30 mg/cm² aufweist.

8. Positive Elektrode für eine Sekundärbatterie nach Anspruch 1, wobei:
die positive Elektrode für eine Sekundärbatterie eine Sprödigkeit von 0,40 N (41 gf) bis 0,49 N (50 gf) aufweist; und
die Sprödigkeit ein Wert ist, bei dem die positive Elektrode auf einer Trägerbasis platziert ist, so dass beide Enden der vorbereiteten positiven Elektrode mit einer Breite von 3 cm oder weniger auf der Trägerbasis angeordnet sind, der Mittelteil von einer Bodenfläche getrennt gemacht ist und dann die Mitte der positiven Elektrode von oben mit einer 3 cm x 10 cm x 10 mm Platte am dünnsten Abschnitt mit einer Geschwindigkeit von 1 mm/s gedrückt wird und die Stärke, bei der die positive Elektrode bricht, gemessen wird.

9. Elektrodenanordnung, umfassend die positive Elektrode für eine Sekundärbatterie nach Anspruch 1, eine negative Elektrode und einen Separator,
wobei die Elektrodenanordnung eine Struktur aufweist, bei der die positive Elektrode, die negative Elektrode und der Separator zusammen gewickelt sind, so dass die positive Elektrode auf der innersten Seite vorhanden ist, und
wobei der innerste Radius (r) 1,4 mm bis 2,0 mm beträgt.

10. Sekundärbatterie, bei der die Elektrodenanordnung nach Anspruch 9 und ein Elektrolyt zusammen in ein Batteriegehäuse eingebaut sind.

## Revendications

1. Électrode positive pour une batterie rechargeable,
dans laquelle l'électrode positive est formée sur au moins une surface du collecteur de courant et comprend une couche de mélange d'électrode positive incluant un matériau actif d'électrode positive, un matériau conducteur, un liant et un dispersant,
dans laquelle le dispersant est un mélange d'un premier dispersant à base de butadiène-acrylonitrile et d'un deuxième dispersant à base d'oxyde d'éthylène-styrène (à base d'EO-styrène),
dans laquelle le dispersant est contenu dans une quantité égale ou supérieure à 0,1 % en poids et inférieure à 0,3 % en poids sur la base du poids total de la couche de mélange d'électrode positive,
le dispersant a un rapport de mélange du premier dispersant et du deuxième dispersant de 8:2 à 2:8 sur une base de poids,
le premier dispersant est un polymère à base de butadiène-acrylonitrile dans lequel 50 à 80 % en poids de butadiène hydrogéné, 0,1 à 10 % en poids de butadiène non hydrogéné et 15 à 40 % en poids d'acrylonitrile sont polymérisés, et
le deuxième dispersant est un polymère à base d'oxyde d'éthylène-styrène dans lequel 20 à 40 % en poids de styrène, 40 à 60 % en poids d'oxyde d'éthylène et 15 à 30 % en poids d'un composé aliphatique sont polymérisés.

2. Électrode positive pour une batterie rechargeable selon la revendication 1, dans laquelle :
le dispersant est contenu dans une quantité de 0,15 % en poids à 0,25 % en poids sur la base du poids total de la couche de mélange d'électrode positive.

3. Électrode positive pour une batterie rechargeable selon la revendication 1, dans laquelle :
le polymère à base de butadiène-acrylonitrile a un poids moléculaire moyen en poids de 30 000 à 80 000.

4. Électrode positive pour une batterie rechargeable selon la revendication 1, dans laquelle :
le polymère à base d'oxyde d'éthylène-styrène a un poids moléculaire moyen en poids de 9 000 à 12 000.

5. Électrode positive pour une batterie rechargeable selon la revendication 1, dans laquelle :
le matériau actif d'électrode positive est un oxyde de métal de transition de lithium représenté par la formule chimique 1 ci-après :
Li₁₊ₓNiₐCO_{b}Mn_{c}M_{1-(a+b+c)}O_{2-y}A_{y} (1)
dans laquelle,
M est un ou plusieurs éléments sélectionnés dans le groupe constitué de Cu, Ti, Mg, Al, Pt et Zr,
A est un halogène de type substitution d'oxygène,
0≤x≤0,5, 0,8≤a≤1, 0≤b≤0,2, 0≤c≤0,2, 0,9≤a+b+c≤1 et 0≤y≤0,001.

6. Électrode positive pour une batterie rechargeable selon la revendication 1, dans laquelle :
le matériau conducteur est un nanotube de carbone.

7. Électrode positive pour une batterie rechargeable selon la revendication 1, dans laquelle :
la couche de mélange d'électrode positive a une quantité de charge de 26 mg/cm² à 30 mg/cm².

8. Électrode positive pour une batterie rechargeable selon la revendication 1, dans laquelle :
l'électrode positive pour une batterie rechargeable a une fragilité de 0,40 N (41 gf) à 0,49 N (50 gf) ; et
la fragilité est une valeur dans laquelle l'électrode positive est placée sur une base de support de sorte que les deux extrémités de l'électrode positive préparée ayant une largeur égale ou inférieure à 3 cm sont situées sur la base de support, la partie centrale est séparée d'une surface du sol, puis le centre de l'électrode positive est pressée depuis la partie supérieure avec une plaque de 3 cm × 10 cm × 10 mm à la partie la plus mince à une vitesse de 1mm/s et la résistance à laquelle l'électrode positive se rompt est mesurée.

9. Ensemble d'électrode comprenant l'électrode positive pour une batterie rechargeable selon la revendication 1, une électrode négative et un séparateur,
dans laquelle l'ensemble d'électrode a une structure dans laquelle l'électrode positive, l'électrode négative et le séparateur sont enroulés ensemble de sorte que l'électrode positive est présente sur le côté le plus intérieur, et
dans laquelle le rayon le plus intérieur (r) est 1,4 mm à 2,0 mm.

10. Batterie rechargeable dans laquelle l'ensemble d'électrode selon la revendication 9 et un électrolyte sont incorporés ensemble dans un boîtier de batterie.
